# EUROPEAN PATENT SPECIFICATION

(11) **EP 1 464 933 B1**
(45) Date of publication and mention of the grant of the patent: **14.11.2007**
(21) Application number: 04250583.4
(22) Date of filing: 04.02.2004
(51) Int. Cl.: G01J 5/10, G01J 5/12

(54) **Apparatus for infrared radiation detection**
Vorrichtung zum Detektieren von Infrarotstrahlung
Dispositif de détection de radiation infrarouge

(30) Priority: 05.02.2003 US 445169 P
(43) Date of publication of application: 06.10.2004
(73) Proprietor: GENERAL ELECTRIC COMPANY, Schenectady, NY 12345 (US)
(72) Inventor: Krellner, Theodore J., Emporium Pennsylvania 15834 (US); Kim, Insik, Kyunggi-Do Korea 435-010 (KR); Lim, Hunnam, Seoul Korea 121-030 (KR); Jang, Kyurull, Kyunggi-Do Korea 447-726 (KR)
(74) Representative: Goode, Ian Roy

(56) References cited:
- US-A- 3 866 046
- US-A- 5 693 942
- US-A1- 2002 006 683
- US-A1- 2002 069 909
- US-A1- 2002 139 410
- US-B1- 6 294 787

## Description

The present disclosure relates generally to infrared radiation detection, and particularly to infrared radiation detection utilizing thermopiles.

A thermopile is a serially-interconnected array of thermocouples, each thermocouple being formed by the junction of two dissimilar materials. The thermocouple array is placed across the hot and cold regions of a structure and the hot junctions are thermally isolated from the cold junctions. The cold junctions are typically placed on a silicon substrate to provide effective heat sinking while the hot junctions are formed over a thin diaphragm that effectively thermally isolates the hot junctions from the cold junctions. In the hot region, there is a black body for absorbing infrared energy, which raises the temperature according to the intensity of the incident infrared energy. Thermopiles have a stable response to DC radiation, are not sensitive to ambient temperature variations, and are responsive to a broad infrared spectrum. Thermopiles also do not require a source of bias voltage or current. In advancing the utility of thermopile infrared radiation detection, it would be beneficial to provide such a detector with enhanced performance characteristics.

US 2002/0139410 describes a thermal radiation sensor including a thermopile.

US 6 294 787 describes a sensor system for the detection of thermal radiation.

Embodiments of the invention provide a thermal detection device as disclosed in claim 1.

Further embodiments of the invention provide an apparatus for infrared (IR) radiation detection. The apparatus includes an IR radiation sensor element and a base header. The IR radiation sensor element includes an infrared radiation receptor, and first and second terminals, wherein the receptor is disposed at a hot region, each terminal is disposed at a cold region, and each terminal is in signal communication with the receptor. The base header includes a support surface for supporting the IR radiation sensor element and a non-support surface displaced from the support surface, wherein a heat transfer between the cold region and the support surface involves thermal conduction, and a heat transfer between the hot region and the non-support surface involves thermal convection.

Yet further embodiments of the invention provide an apparatus for IR radiation detection having an IR radiation sensor element having a hot region and a cold region, and a base header. The base header has a support surface for supporting the IR radiation sensor element and a non-support surface displaced from the support surface. A portion of the IR radiation sensor element at the cold region opposes a portion of the support surface, and a portion of the IR radiation sensor element at the hot region opposes a portion of the non-support surface.

Referring to the exemplary drawings wherein like elements are numbered alike in the accompanying Figures:
Fig. 1 depicts an isometric exploded assembly view of an exemplary infrared radiation detector in accordance with an embodiment of the invention;
Fig. 2 depicts a side section view of the exemplary infrared radiation detector of Figure 1;
Figs. 3-4 depict isometric views of portions of the exemplary infrared radiation detector of Figure 1;
Figs. 5-6 depict an alternative embodiment to the exemplary infrared radiation detector of Figure 1; and
Fig. 7 depicts a graphical representation of normalized output signals of exemplary embodiments of the invention.

Embodiments of the invention provide an infrared (IR) radiation detector (also referred to as an IR detector or an IR sensor, or more generally as a thermal detection device) having increased thermal isolation between the sensor components for increased signal output.

The invention provides an IR detector having hot and cold temperature regions. The IR detector includes a thermopile having serially-interconnected thermocouples, with each thermocouple being placed across the hot and cold temperature regions in such a manner as to provide for additive thermocouple polarities. A thermal absorber, or more specifically an infrared absorber, such as a black body, is arranged at the hot region and is thermally coupled to, in thermal communication with, the thermopile. A base header having a support surface to support the thermopile includes a cavity at the support surface that provides a non-support surface. A diaphragm disposed between the support surface and the thermopile is arranged with a portion of the cavity opposing a portion of the thermopile. By providing a cavity on one side of the diaphragm and in opposition to the thermopile on the other side of the diaphragm, an increase in thermal isolation between the thermopile and the base header is realized, resulting in an increase in voltage signal output of the infrared radiation detector.

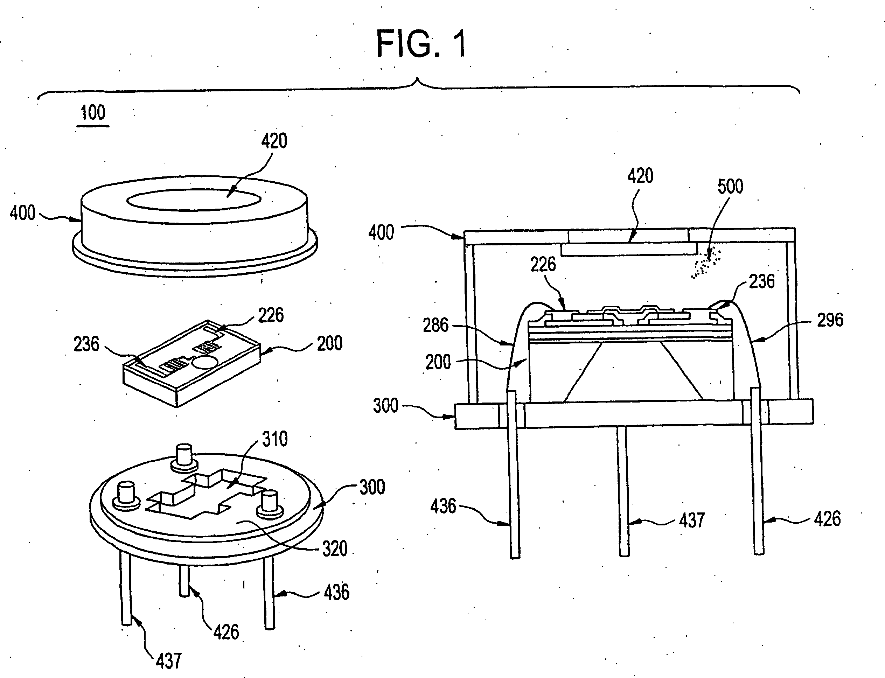

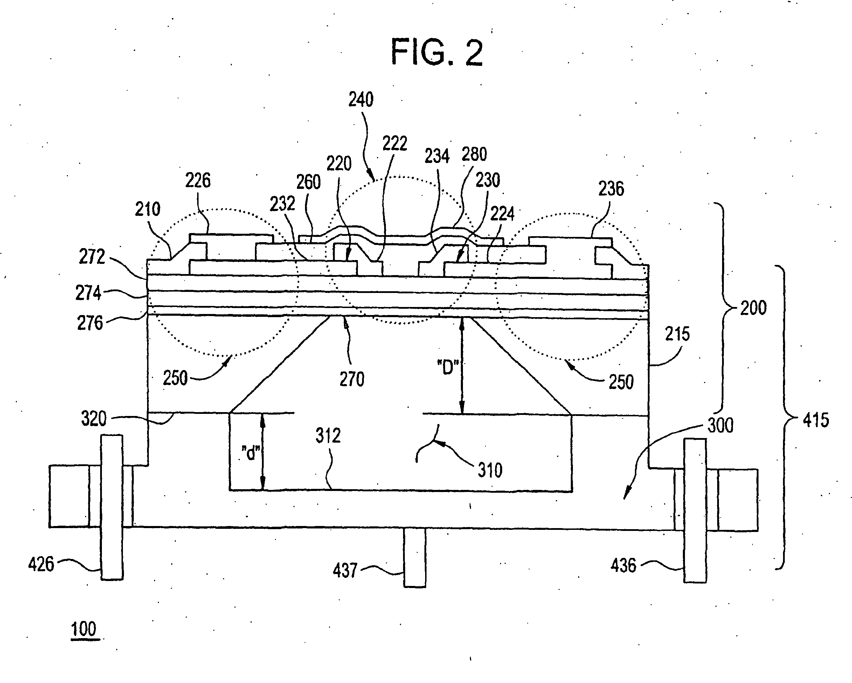

Figure 1 is an exemplary embodiment of an IR sensor 100 having an IR sensor element 200 supported by a base header 300 and arranged between a metal cap 400 and base header 300. IR sensor element 200 and base header 300 form base header assembly 415 (see Figure 2). IR sensor element 200, although depicted as rectangular in shape, may be of any shape suitable for the purpose disclosed herein. Base header 300 may be composed of metal or any other material suitable for the purpose disclosed herein, such as a silicon substrate for example. Arranged in metal cap 400 is a window filter 420 for transmitting IR radiation of a predefined wavelength. Window filter 420 includes both broad band pass filters (BBP) and narrow band pass filters (NBP). In an embodiment, IR sensor element 200 includes a MEMS (microelectromechanical system) silicon thermopile 210 supported by diaphragm films 270 and a support rim 215, best seen by now referring to Figure 2.

Thermopile 210 includes a serially interconnected array of thermocouples, depicted in Figure 2 as first and second thermocouples 220, 230, that are placed across hot 240 and cold 250 regions of IR sensor 100. Each thermocouple 220, 230 is formed by the junction of two dissimilar materials, such as polysilicon and aluminum for example, depicted as thermocouple portions 222, 232 and 224, 234, respectively, and are arranged having opposite polarities with respect to each other such that the voltage signal across terminals 226 and 236 is the sum of the voltage signals across thermocouples 220, 230. Terminals 226, 236 are connected to pins 436, 426 by wires 286, 296, respectively. The hot and cold regions 240, 250 of thermocouples 220, 230 (also referred to as hot and cold junctions) are thermally isolated from one another by a thermal insulator 260 and by diaphragm films 270. Diaphragm films 270 have a low thermal conductance and capacitance and are depicted having three layered films 272, 274, 276, but may have any number and thickness of films suitable for the purposes of thermal isolation as herein disclosed. A black body 280 is thermally coupled to thermocouples 220, 230 at hot region 240, thereby serving to absorb infrared radiation and to raise the temperature at hot region 240. The temperature increase at hot region 240 is according to the intensity of the incident infrared energy. As the temperature at hot region 240 increases, so the voltage signal across terminals 226, 236 increases. The better the thermal isolation is between hot and cold junctions 240, 250 of thermocouples 220, 230, the better the voltage signal across terminals 226, 236 will be.

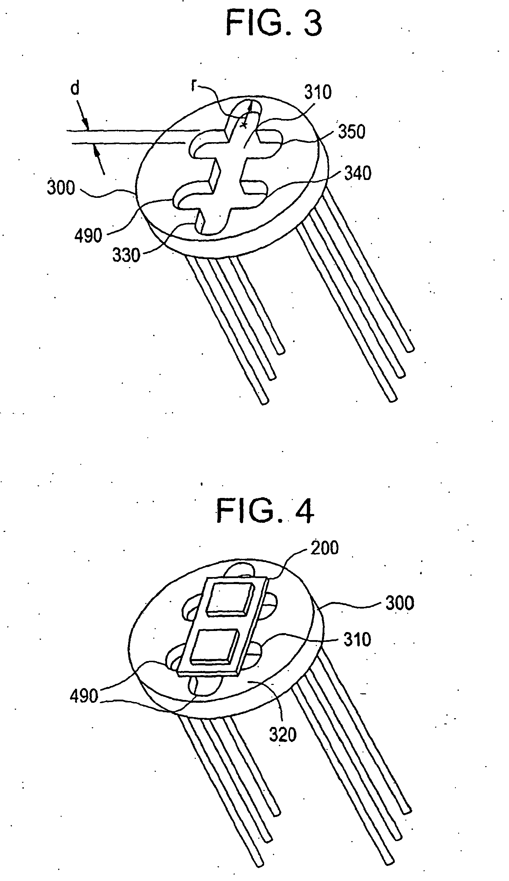

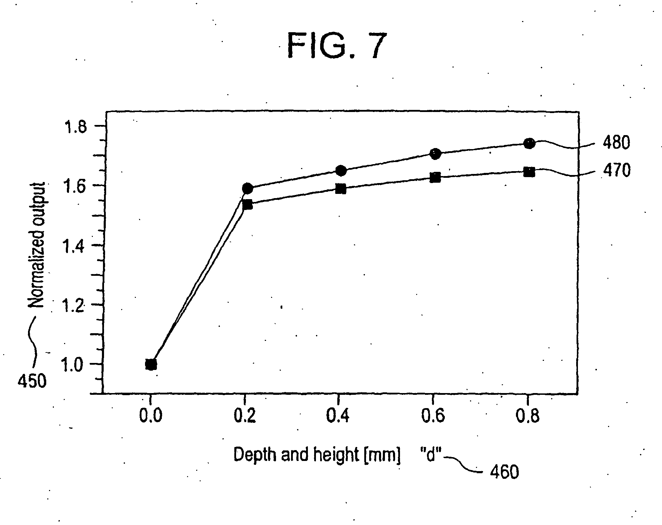

In accordance with embodiments of the invention, applicants have demonstrated that an increase in distance between the material of diaphragm films 270 and the material of base header 300 results in an increase in output signal from IR sensor element 200, which is discussed later in reference to Figure 7. As depicted in Figures 2 and 3, this increase in distance may be accomplished without changing the overall dimensions of IR sensor 100 by removing material, such as by micromachining or etching for example, from base header 300, thereby creating a cavity 310 having a non-support surface 312. The material of base header 300 not removed by micromachining provides a support surface 320 for supporting IR sensor element 200. An exemplary cavity 310 is depicted in Figure 3, however, cavity 310 may be created with any configuration suitable for the purpose of enhancing the signal output of IR sensor element 200, such as a circular shape or star shape for example.

As depicted in Figure 3, an embodiment of the invention may be provided with cavity 310 being formed from three micromachined paths, the first path 330 being about 10 millimeters (mm) long, and the second 340 and third 350 paths crossing the first path 330 and being about 6 mm long. Each exemplary path 330, 340, 350 may be micromachined to about a 1.1 mm depth (depicted by dimension "d") and has a tool radius of about 1 mm (depicted by radius "r"). In an embodiment, dimension "d" is equal to or greater than about 0.1 mm and equal to or less than about 10 mm, and in another embodiment is equal to about 1 mm. Dimension "d" denotes an incremental increase in air space distance between diaphragm films 270 and base header 300 created by the machining of cavity 310.

Figure 4 depicts IR sensor element 200 supported by support surface 320 with a portion extending over, or opposing, non-support surface 312. In an embodiment, the thickness of IR sensor element 200 is about 500 micrometers and the thickness of diaphragm films 270 is about 1 micrometer.

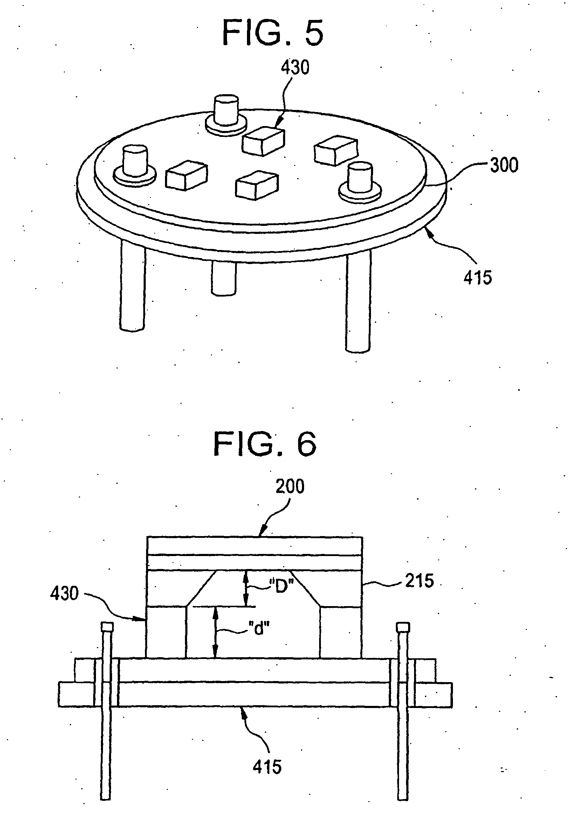

Figures 5 and 6 depict an alternative embodiment of the invention that utilizes spacers 430 arranged on base header 300 for creating the additional dimension "d" between diaphragm films 270 and base header 300. Alternatively, diaphragm films 270 may be suitably shaped to provide incremental distance "d". A further alternative embodiment may include a micromachined base header 300 with support columns extending from the bottom surface of cavity 310 to provide support surface 320.

Figure 7 depicts a graph of signal output 450 of IR sensor 100 as a function of incremental spacing "d" 460 for the first exemplary embodiment depicted in Figures 1-4 and the second exemplary embodiment depicted in Figures 5-6. As depicted, signal output 450 is normalized, thereby resulting in a signal output of 1.0 for an IR sensor 100 having no incremental air space distance "d" between diaphragm films 270 and base header 300 (that is, d=0). First and second exemplary embodiments of the invention having an incremental air space distance "d" are shown having output signals 470 and 480, respectively. As depicted, first and second exemplary embodiments have normalized output signals of about 1.65 and about 1.75, respectively, at a "d" dimension of about d=0.8 mm. Accordingly, a sensor having about d=0.8 mm results in an output signal strength of about 65% to about 75% larger than a sensor with d=0 mm.

In a fully assembled IR sensor 100, metal cap 400 is attached to metal base header 300 to provide a sealed unit that encapsulates IR sensor element 200. IR sensor element 200 may be bonded to base header 300 using any suitable bonding technology, such as adhesives for example. The inner cavity, or internal volume, defined between metal cap 400 and metal base header 300 may be filled with a filling gas of suitable thermal properties, thereby providing predictable heat transfer between and among the various surfaces within the inner cavity, including non-support surface 312. In the absence of cavity 310 defined by incremental air space dimension "d", the heat transfer between diaphragm films 270 and base header 300, having an air gap of "D" as shown in Figures 2 and 6, is primarily through conduction, and the filling gas confined by gap "D" cannot readily mix with the remaining filling gas between metal cap 400 and metal base header 300. As used herein, the term air space denotes a space between components, regardless of whether the space is filled with air or a filling gas. With the introduction of incremental air space "d", the heat transfer between diaphragm films 270 and base header 300 includes a convection component, which provides less heat transfer than the conduction component does, thereby providing greater thermal isolation between diaphragm films 270 and base header 300. Additionally, with the introduction of side channels 490, shown in Figures 3-4, the filling gas beneath IR sensor element 200 may better mix with the filling gas between metal cap 400 and metal base header 300, thereby resulting in less heat buildup beneath IR sensor element 200 for further improvement in thermal isolation.

Some embodiments of the invention may provide some of the following advantages: increased signal output; a reduction in required signal amplification; and, increased signal noise immunity.

## Claims

1. An encapsulated thermal detection device having a hot and a cold region (240, 250), the device comprising:
an IR sensor element (200) comprising:
a) a first thermocouple (220) disposed across the hot and cold regions (240, 250), the first thermocouple (220) having a first terminal (226) at the cold region (250) and a defined polarity; and
b) a second thermocouple (230) disposed across the hot and cold regions (240, 250), the second thermocouple (230) having a second terminal (236) at the cold region (250) and a polarity opposite to the polarity of the first thermocouple (220) connected in series with said first thermocouple (220);
a thermal absorber (280) disposed at the hot region (240) and in thermal communication with the first and second thermocouples (220, 230);
a base header (300) having a support surface (320) for supporting said IR sensor element (200) and a non-support surface (312) displaced from the support surface (320) and formed in a cavity (310) which is provided in the base header (300) and opposes the IR sensor element (200);
wherein a portion of the support surface (320) opposes a portion of the cold region (250), and a portion of the non-support surface (312) opposes a portion of the hot region (240); and a cap (400) attached to base header (300) to provide a sealed unit that encapsulates IR sensor element (200); **characterized in that**:
the cavity (310) comprises side channels (490) to enable a filling gas beneath the IR sensor element (200) to mix with the filling gas between the cap (400) and the base header (300).

2. The device of Claim 1, further comprising:
a diaphragm (270) disposed between the support surface (320) and the first and second thermocouples (220, 230), such that a portion of the diaphragm (270) opposes the non-support surface (312).

3. The device of Claim 1, wherein:
the first and second thermocouples (220, 230) are responsive to thermal radiation absorbed at the thermal absorber (280) to generate a combined electrical signal at the first and second terminals (226, 236); and
the combined electrical signal for the device having a distance between the support surface (320) and the non-support surface (312) equal to about 0.8 millimeters is equal to or greater than about 1.65 times the combined electrical signal of an alternative device having a distance between the support surface (320) and the non-support surface (312) equal to about zero millimeters.

4. The device of Claim 1, wherein the depth of the cavity (310) is equal to or greater than about 0.1 millimeter and equal to or less than about 10 millimeter.

5. The device of Claim 1, wherein the cap (400) has a window (420) proximate the hot region (240) for transmitting thermal radiation therethrough.

6. An apparatus for infrared radiation detection, the apparatus comprising the device of any preceding claim.

## Patentansprüche

1. Gekapselte thermische Detektionsvorrichtung mit einem heißen und einem kalten Bereich (240, 250), wobei zu der Vorrichtung gehören:
ein Infrarotsensorelement (200) mit:
a) einem ersten Thermoelement (220), das über der heißen und kalten Region (240, 250) angeordnet ist, wobei das erste Thermoelement (220) einen ersten Anschluss (226) bei dem kalten Bereich (250) und eine definiert Polarität aufweist; und
b) einem zweiten Thermoelement (230), das über der heißen und kalten Region (240, 250) angeordnet ist, wobei das zweite Thermoelement (230) einen zweiten Anschluss (236) bei dem kalten Bereich (250) und eine gegenüber der Polarität des ersten Thermoelements (220) entgegengesetzte Polarität aufweist und mit dem ersten Thermoelement (220) in Reihe liegt;
ein Wärmeabsorber (280), der bei dem heißen Bereich (240) angeordnet ist und in thermischer Verbindung mit dem ersten und zweiten Thermoelement (220, 230) steht;
ein Basiskopf (300), der eine Trägerfläche (320) zum Tragen des Infrarotsensorelements (200) und eine Nicht-Trägerfläche (312) aufweist, die von der Trägerfläche (320) beabstandet und in einem Hohlraum (310) ausgebildet ist, der in dem Basiskopf (300) ausgebildet ist und dem Infrarotsensorelement (200) gegenüberliegt;
wobei ein Abschnitt der Trägerfläche (320) einem Abschnitt des kalten Bereichs (250) gegenüberliegt, und ein Abschnitt der Nicht-Trägerfläche (312) einem Abschnitt des heißen Bereichs (240) gegenüberliegt; und
eine Kappe (400), die an dem Basiskopf (300) angebracht ist, um eine dicht verschlossene Einheit zu bilden, die das Infrarotsensorelement (200) einkapselt; **dadurch gekennzeichnet, dass**:
der Hohlraum (310) Seitenkanäle (490) aufweist, um einem unterhalb des Infrarotsensorelements (200) befindlichen Füllgas zu ermöglichen, sich mit dem Füllgas zwischen der Kappe (400) und dem Basiskopf (300) zu vermischen.

2. Vorrichtung nach Anspruch 1, ferner mit:
einer Membran (270), die zwischen der Trägerfläche (320) und dem ersten und zweiten Thermoelement (220, 230) angeordnet ist, so dass ein Abschnitt der Membran (270) der Nicht-Trägerfläche (312) gegenüberliegt.

3. Vorrichtung nach Anspruch 1, wobei:
das erste und zweite Thermoelement (220, 230) auf thermische Strahlung ansprechen, die bei dem Wärmeabsorber (280) absorbiert wird, um an dem ersten und zweiten Anschluss (226, 236) ein zusammengeführtes elektrisches Signal zu erzeugen; und
das zusammengeführte elektrische Signal für die Vorrichtung, die einen Abstand von etwa 0,8 Millimeter zwischen der Trägerfläche (320) und der Nicht-Trägerfläche (312) aufweist, gleich oder größer ist, als etwa das 1,65fache des zusammengeführten elektrischen Signals einer abgewandelten Vorrichtung, die einen Abstand zwischen der Trägerfläche (320) und der Nicht-Trägerfläche (312) aufweist, der ungefähr gleich Null Millimeter ist.

4. Vorrichtung nach Anspruch 1, wobei die Tiefe des Hohlraums (310) größer gleich etwa 0,1 Millimeter und kleiner gleich etwa 10 Millimeter ist.

5. Vorrichtung nach Anspruch 1, wobei die Kappe (400) ein dem heißen Bereich (240) unmittelbar benachbartes Fenster (420) aufweist, um durch dieses hindurch thermische Strahlung zu übertragen.

6. Vorrichtung zur Detektion von Infrarotstrahlung, wobei die Vorrichtung die Vorrichtung nach einem der vorhergehenden Ansprüche enthält.

## Revendications

1. Dispositif de détection thermique encapsulé comportant une zone chaude et une zone froide (240, 250), le dispositif comprenant :
un élément (200) de détection IR comprenant :
a) un premier thermocouple (220) disposé à travers les zones chaude et froide (240, 250), le premier thermocouple (220) comportant une première borne (226) au niveau de la zone froide (250) et une polarité définie ; et
b) un deuxième thermocouple (230) disposé à travers les zones chaude et froide (240, 250), le deuxième thermocouple (230) comportant une deuxième borne (236) au niveau de la zone froide (250) et une polarité opposée à la polarité du premier thermocouple (220) relié en série avec ledit premier thermocouple (220) ;
un absorbeur thermique (280) disposé au niveau de la zone chaude (240) et en communication thermique avec le premier et le deuxième thermocouples (220, 230) ;
un adaptateur (300) de base comportant une surface (320) de support pour supporter ledit élément (200) de détection IR et une surface (312) de non-support déplacée à partir de la surface (320) de support et formée dans une cavité (310) qui est prévue dans l'adaptateur (300) de base et est opposée à l'élément (200) de détection IR ;
dans lequel une partie de la surface (320) de support est opposée à une partie de la zone froide (250), et une partie de la surface (312) de non-support est opposée à une partie de la zone chaude (240) ; et un capuchon (400) fixé à l'adaptateur (300) de base pour fournir une unité étanche qui encapsule l'élément (200) de détection IR ; **caractérisé en ce que** :
la cavité (310) comprend des canaux latéraux (490) pour permettre à un gaz de remplissage au-dessous de l'élément (200) de détection IR de se mélanger avec le gaz de remplissage entre le capuchon (400) et l'adaptateur (300) de base.

2. Dispositif selon la revendication 1, comprenant en outre :
une membrane (270) disposée entre la surface (320) de support et le premier et le deuxième thermocouples (220, 230), de sorte qu'une partie de la membrane (270) soit opposée à la surface (312) de non-support.

3. Dispositif selon la revendication 1, dans lequel :
le premier et le deuxième thermocouples (220, 230) sont sensibles au rayonnement thermique absorbé au niveau de l'absorbeur thermique (280) pour générer un signal électrique combiné au niveau de la première et de la deuxième bornes (226, 236) ; et
le signal électrique combiné pour le dispositif comportant une distance entre la surface (320) de support et la surface (312) de non-support égale à environ 0,8 millimètres qui est égale ou supérieure à environ 1,65 fois le signal électrique combiné d'un dispositif alternatif comportant une distance entre la surface (320) de support et la surface (312) de non-support égale à environ zéro millimètre.

4. Dispositif selon la revendication 1, dans lequel la profondeur de la cavité (310) est égale ou supérieure à environ 0,1 millimètres et égale ou inférieure à environ 10 millimètres.

5. Dispositif selon la revendication 1, dans lequel le capuchon (400) comporte une fenêtre (420) à proximité de la zone chaude (240) pour transmettre un rayonnement thermique à travers celle-ci.

6. Appareil pour détecter un rayonnement infrarouge, l'appareil comprenant le dispositif selon l'une quelconque des revendications précédentes.
